# EUROPÄISCHE PATENTANMELDUNG

(11) **EP 0 824 089 A1**
(43) Veröffentlichungstag der Anmeldung: **18.02.1998**
(21) Anmeldenummer: 97113069.5
(22) Anmeldetag: 30.07.1997
(51) Int. Cl.: C02F 9/00, C02F 11/12, C25D 21/18

(54) **Verfahren zur Trocknung von Galvanikschlamm**

(30) Priorität: 14.08.1996 DE 19632733
(71) Anmelder: Hadert, Thomas, 58509 Lüdenscheid (DE)
(72) Erfinder: Hadert, Thomas, 58509 Lüdenscheid (DE)
(74) Vertreter: Hassler, Werner, Dr.

(57) **Zusammenfassung**

Ein Verfahren zur Trocknung von Galvanikschlamm. Das technische Problem ist eine wirtschaftliche und sichere Trocknung von Galvanikschlamm. Der Galvanikschlamm aus dem Badbehälter wird in eine Trockenvorrichtung eingebracht, und der Trockenvorrichtung wird Prozeßwärme des Badbehälters zugeführt.

## Beschreibung

Die Erfindung betrifft ein Verfahren zur Trocknung von Galvanikschlamm.

Die Entsorgung von Galvanikschlamm ist sehr aufwendig. Wesentlich einfacher ist die Entsorgung von deponiefähigen Galvanikrückständen, also von weitgehend getrockneten und schüttfähigen Rückständen. Jedoch steht kein wirtschaftlich durchführbares Verfahren zur Trocknung von Galvanikschlamm zur Verfügung.

Die DE 36 30 697 A1 schlägt eine Vermengung der Galvanikschlämme mit Ton und ein Brennen des Gemischs zu Klinkern vor. Da das Verhalten der Schwermetalle der Galvanikschlämme in den Klinkern weitgehend unbekannt ist, besteht die Gefahr einer Umweltbelastung oder Umweltverseuchung, so daß dieses Verfahren nicht praktikabel ist.

Aufgabe der Erfindung ist eine wirtschaftliche und sichere Trocknung von Galvanikschlamm.

Diese Aufgabe wird nach der Erfindung dadurch gelöst, daß der Galvanikschlamm aus dem Badbehälter in eine Trockenvorrichtung eingebracht und der Trockenvorrichtung Prozeßwärme des Badbehälters zugeführt wird.

Die Erfindung unterscheidet sich insofern vom Stand der Technik, als die bei jedem Galvanikprozeß anfallende Prozeßwärme zur Trocknung des Galvanikschlamms verwertet wird. Damit benötigt man keine Energiekosten für die Trocknung. Der Galvanikschlamm fällt in konzentriertem und leicht handhabbarem, deponiefähigem Zustand an, so daß die Entsorgung problemlos und kostengünstig möglich ist.

Zur Steuerung der Badtemperatur ist ein Wärmetauscher vorhanden. Derselbe kann im Rahmen der Erfindung dazu genutzt werden, daß zur Beheizung der Trockenvorrichtung die Prozeßwärme des Badbehälters über einen Wärmetauscher gewonnen wird.

Wenn die Prozeßwärme bei genügend hohem Temperaturniveau anfällt, kann die Trockenvorrichtung als Bandtrockner ausgebildet sein.

Eine vollständige Trocknung auch bei Prozeßwärme niedriger Temperatur wird dadurch sichergestellt, daß die Trockenvorrichtung als Vakumtrockner ausgebildet ist.

Ein Ausführungsbeispiel der Erfindung wird anhand des anliegenden Blockschemas erläutert.

Ein Badbehälter 1 enthält ein galvanisches Bad zur Behandlung von Artikeln. In dem galvanischen Bad setzt sich Schlamm ab. Derselbe wird von Zeit zu Zeit oder kontinuierlich aus dem Bad herausgenommen und entsorgt. Die Entsorgung erfordert eine aufwendige und teuere Sonderbehandlung.

Der Badbehälter 1 muß auf einer konstanten Prozeßtemperatur gehalten werden. Die Prozeßtemperatur hat in Abhängigkeit von dem jeweiligen Galvanikprozeß einen Wert zwischen 0 °C und 50 °C. Es ist also ein Wärmetauscher 3 oder eine Kühlanlage erforderlich.

Es ist eine Trockenvorrichtung 2 zur Aufnahme des Schlamms vorgesehen, in die der Schlamm kontinuierlich oder partieweise eingebracht wird. Die Abwärme des Wärmetauschers 3 wird in die Trockenvorrichtung 2 eingeleitet, so daß der Schlamm aufgeheizt und getrocknet wird.

Die Trockenvorrichtung 3 kann als Bandtrockner ausgebildet sein. Dabei wird der Schlamm auf einem Band bewegt und durch die eingeleitete Energie erwärmt und getrocknet.

Die Trockenvorrichtung 3 kann auch als Vakuumtrockner ausgebildet sien. Die Druckerniedrigung fördert die Verdampfung des Wassers und damit die Trocknung.

Schließlich fällt der getrocknete Schlamm in schüttfähigem und deponiefähigem Zustand an, also mit dem jeweils vorgeschirebenen Trockengehalt, so daß der Schlamm ohne weitere Sonderbehandlung deponiert werden kann.

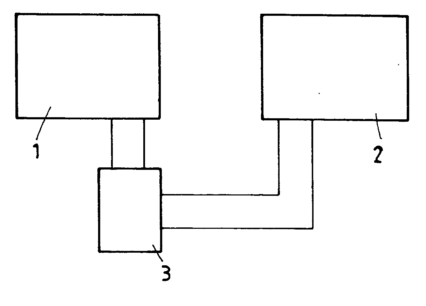

## Patentansprüche

1. Verfahren zur Trocknung von Galvanikschlamm, dadurch gekennzeichnet, daß der Galvanikschlamm aus dem Badbehälter in eine Trockenvorrichtung eingebracht und der Trockenvorrichtung Prozeßwärme des Badbehälters zugeführt wird.

2. Verfahren nach Anspruch 1, dadurch gekennzeichnet, daß die Prozeßwärme des Badbehälters über einen Wärmetauscher gewonnen wird.

3. Verfahren nach Anspruch 1 oder 2, dadurch gekennzeichnet, daß die Trockenvorrichtung als Bandtrockner ausgebildet ist.

4. Verfahren nach Anspruch 1 oder 2, dadurch gekennzeichnet, daß die Trockenvorrichtung als Vakumtrockner ausgebildet ist.
